# EUROPEAN PATENT APPLICATION

(11) **EP 2 642 190 A2**
(43) Date of publication of application: **25.09.2013**
(21) Application number: 13160274.0
(22) Date of filing: 21.03.2013
(51) Int. Cl.: F21S 8/10, F21V 7/00

(54) **Mounting structure of vehicle component**

(30) Priority: 23.03.2012 JP 2012067764
(71) Applicant: Ichikoh Industries, Ltd., Kanagawa 259-1192 (JP)
(72) Inventor: Abe, Toshiya, Isehara-shi, Kanagawa 259-1192 (JP)
(74) Representative: Grünecker, Kinkeldey, Stockmair & Schwanhäusser

(57) **Abstract**

The present invention provides: an upside and a downside rotary shafts 11U, 11 D that are respectively provided on an upside and a downside movable reflectors 4U, 4D; and a cylinder portion 12 which is provided on an upside and a downside pinions 15U, 15D and into which the upside and the downside rotary shafts 11U, 11D are to be inserted. A protrusion portion 16 is provided for the upside and the downside rotary shafts 11U, 11D. A slit 18 is provided in the cylinder portion 12. A recessed portion 19 is provided in the slit 18. As a result, it is capable of mounting a respective one of the upside and the downside rotary shafts and the cylinder portion in such a manner as to be free of a backlash in a rotational direction.

## Description

### CROSS REFERENCE TO RELATED APPLICATIONS

This application claims priority of Japanese Patent Application No. 2012-067764 filed on March 23, 2012. The contents of the application are incorporated herein by reference in their entirety.

### BACKGROUND OF THE INVENTION

### 1. Field of the Invention

The present invention relates to a mounting structure for mounting a driving member and a driving target member of vehicle component.

### 2. Description of the Related Art

A mounting structure of vehicle component of such type is conventionally known (for example, Japanese Unexamined Patent Application Publication No. 10-258676). Hereinafter, a conventional mounting structure of vehicle component will be described. The conventional mounting structure of vehicle component is provided in such a manner that an engagement recessed portion of a D cutting surface of an operating shaft serving as a driving member and an engagement protrusion portion of a D cutting surface of an adjustment screw serving as a driving target member are configured to engage with each other. When the operating shaft is rotated, its related rotation force is transmitted to the adjustment screw via the engagement recessed portion and the engagement protrusion portion, and then, the adjustment screw rotates.

In such a mounting structure of vehicle component, it is important to mount the driving member and the driving target member to each other in such a manner as to be free of a backlash in a rotational direction.

### SUMMARY OF THE INVENTION

The present invention aims to provide a mounting structure of vehicle component, which is capable of mounting a driving member and a driving target member to each other in such a manner as to be free of a backlash.

In a first aspect of the present invention, a mounting structure for mounting a driving member and a driving target member of vehicle component to each other, the mounting structure comprising:
a rotary shaft portion that is provided on either one of the driving member and the driving target member; and
a cylinder portion that is provided on the other one of the driving member and the driving target member, the cylinder portion having an insert hole into which the rotary shaft portion is to be inserted,
wherein a protrusion portion that is orthogonal to an shaft line of the rotary shaft portion is provided on the rotary shaft portion,
wherein a slit of which a width is smaller than a width of the protrusion portion is provided in the cylinder portion, and
wherein a recessed portion with which the protrusion is configured to engage is provided in an edge of the slit.

The mounting structure of vehicle component, according to a second aspect of the present invention, wherein in the first aspect, a plate portion engaging with the slit is provided on the rotary shaft portion.

According to the mounting structure to vehicle component, of the present invention, a driving member and a driving target member can be mounted to each other in such a manner as to be free of a backlash.

### BRIEF DESCRIPTION OF THE DRAWINGS

FIG. 1 is a perspective view of a lamp unit showing a first embodiment of a mounting structure of vehicle component, according to the present invention;
FIG. 2 is a perspective view showing a state in which a pinion serving as driving member and a movable reflector serving as a driving target member are mounted;
FIG. 3 is a partial perspective view showing a state before mounting the pinion as the driving member and the movable reflector serving as the driving target member (a demounted state);
FIG. 4 is a partial front view showing a state before mounting the pinion serving as the driving member and the movable reflector serving as the driving target member (a demounted state);
FIG. 5 is a front view showing a state in which the pinion serving as the driving member and the movable reflector serving as the driving target member are mounted to each other;
FIG. 6 shows a second embodiment of a mounting structure of vehicle component, according to the present invention, and is a partial front view of a state before the pinion serving as the driving member and the movable reflector serving as the driving target member are mounted to each other (a demounted state);
FIG. 7 is a front view showing a state in which the pinion serving as the driving member and the movable reflector serving as the driving target member are mounted to each other;
FIG. 8 is an explanatory view showing a modification example of a protrusion portion and a recessed portion; and
FIG. 9 is a sectional view showing a third embodiment of a mounting structure of vehicle component, according to the present invention (a sectional view taken along the line IX-IX in FIG. 5).

### DESCRIPTION OF THE PREFERRED EMBODIMENTS

Hereinafter, three examples of the embodiments (exemplary embodiments) of a mounting structure of vehicle component, according to the present invention, will be described in detail with reference to the drawings. It is to be noted that the present invention is not limited by these embodiments.

### (Description of Configuration of First Embodiment)

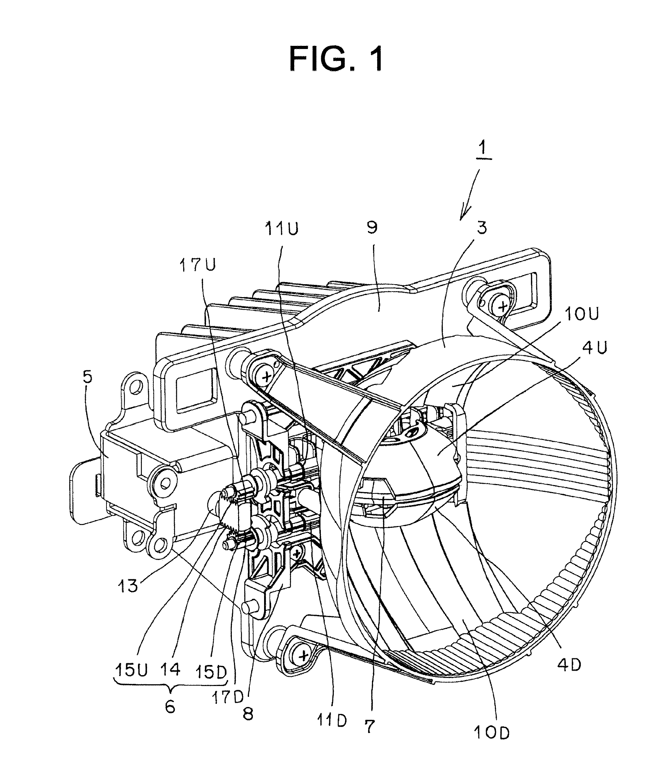

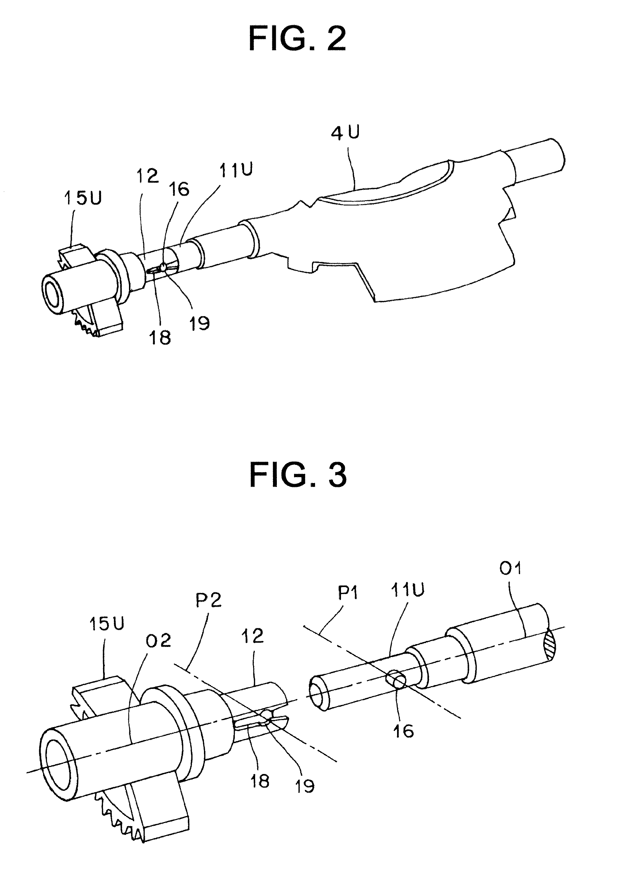

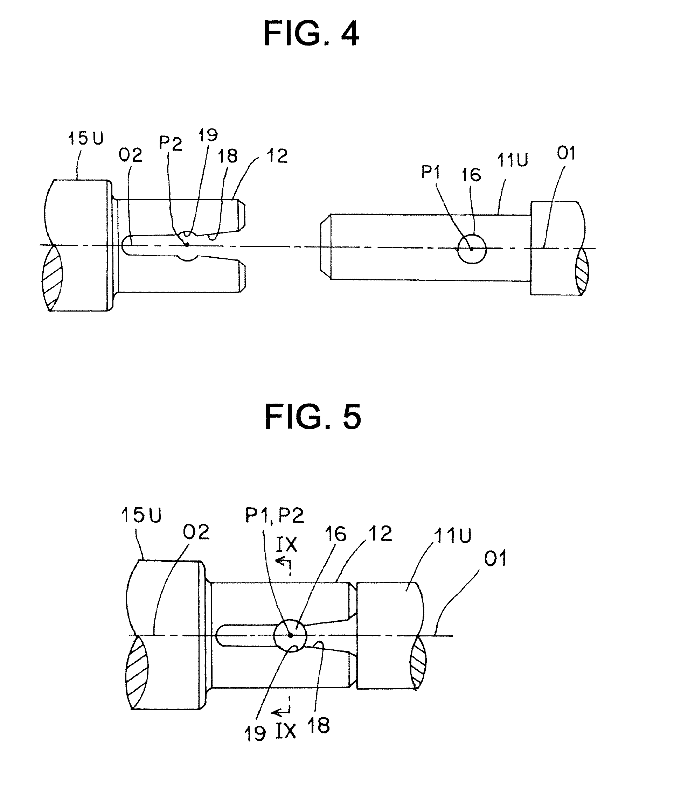

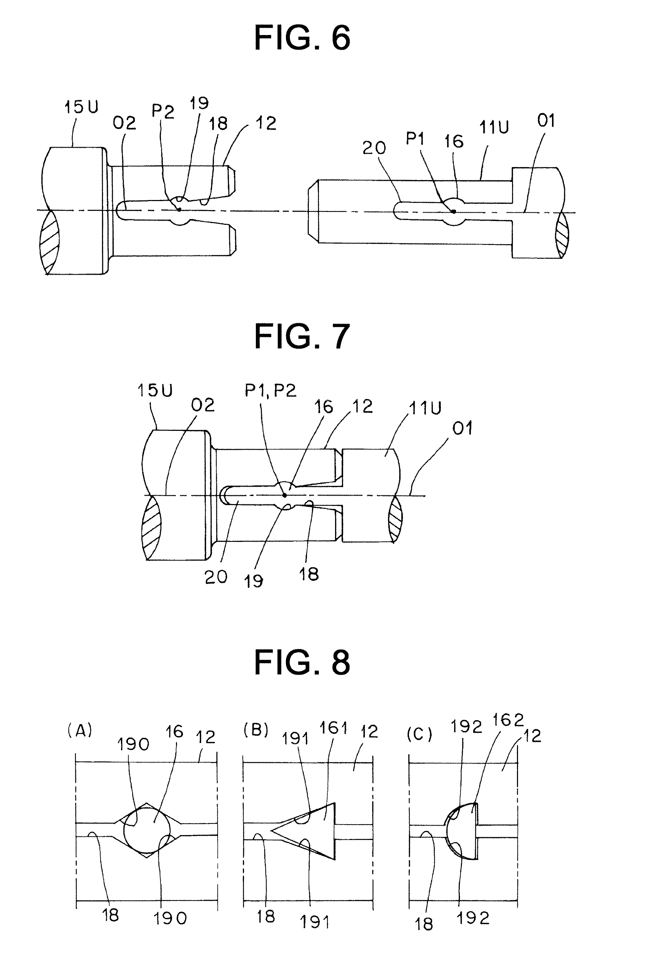

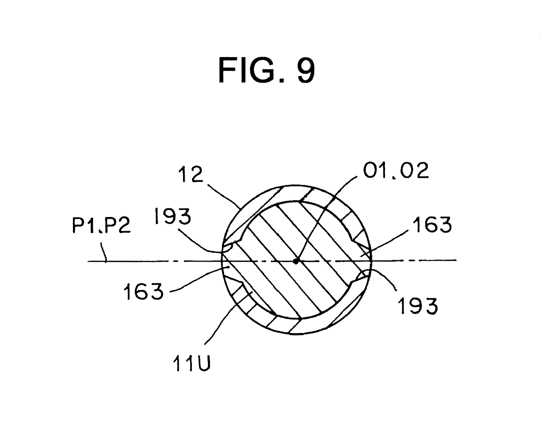

FIG. 1 to FIG. 5 each show mounting structure of a vehicle component according to a first embodiment of the present invention. Hereinafter, a configuration of the mounting structure of the vehicle component in the first embodiment will be described. In the figures, reference numeral 1 designates a vehicle headlamp (an automotive headlamp) in the first embodiment. The vehicle headlamp 1 is adapted to switch a light distribution pattern for low beam (a light distribution pattern for passing) LP shown in FIG. 8 and a light distribution pattern for high beam (a light distribution pattern for cruising) shown in FIG. 9 from each other to emit light forward of a vehicle.

### (Description of vehicle headlamp 1)

The vehicle headlamp 1 is made of: an upside semiconductor-type light source (not shown) and a lower semiconductor-type light source (not shown); a fixed reflector 3; an upside movable reflector 4U and a downside movable reflector 4D; a solenoid 5 serving as a driving source; a driving force transmission mechanism 6; a light source mount member (an LED base) 7; a mount bracket 8; a heat sink member 9; and a lamp housing and a lamp lens (such as a transparent outer lens, for example), although not shown.

A lamp unit is configured with the upside semiconductor-type light source and the lower semiconductor-type light source; the fixed reflector 3; the upside movable reflector 4U and the downside movable reflector 4D; the solenoid 5; the driving force transmission mechanism 6; the light source mount member 7; the mount bracket 8; and the heat sink member 9. The constituent elements 3, 4U, 4D, 5, 6, 7, 8, and 9 of the lamp unit are disposed in a lamp room that is defined by the lamp housing and the lamp lens, for example, via an optical axis adjustment mechanism (not shown). It is to be noted that in the lamp room, in addition to the constituent elements 3, 4U, 4D, 5, 6, 7, 8, and 9 of the lamp unit, there may be disposed another lamp such as a fog lamp, a cornering lamp, a clearance lamp, or a turning signal lamp.

The light source mount member 7 and the mount bracket 8 are fixed in a state in which these members are respectively positioned in their predetermined locations in the heat sink member 9. The heat sink member 9 is mounted on the lamp housing via the optical axis adjustment mechanism.

The semiconductor-type light sources are self-light semiconductor-type light source such as an LED or an EL (an organic EL), for example, in other words, are semiconductor-type light sources. In the first embodiment, an LED is used. The upside semiconductor-type light source and the downside semiconductor-type light source are respectively mounted on top and bottom mount surfaces of the light source mount member 7.

The fixed reflector 3 is fixed to the heat sink 9. The fixed reflector 3 has an upside reflection surface 10U and a downside reflection surface 10D, a respective one of which is made of a parabolic free curved surface (a NURBS-curved surface). The upside reflection surface 10U serves to reflect light from the upside semiconductor-type light source. The downside reflection surface 10D serves to reflect light from the downside semiconductor-type light source.

On both of the left and right sides of the upside movable reflector 4U and the downside movable reflector 4D, an upper rotary shaft 11U and a lower rotary shaft 11D are respectively integrally provided transversely and horizontally. The rotary shafts 11U and 11D are rotatably mounted on the mount bracket 8. As a result, the upside movable reflector 4U and the downside movable reflector 4D are rotatably mounted on the mount bracket 8 between a first location (the location shown in FIG. 1) and a second location. It is to be noted that at the upside movable reflector 4U and the downside movable reflector 4D, there may be provided a spring (not shown) adapted to automatically restore the upside movable reflector 4U and the downside movable reflector 4D from the second location to the first location.

The upside movable reflector 4U and the downside movable reflector 4D have an upper reflection surface 12U and a downside reflection surface 12D, a respective one of which is made of a parabolic free curved surface (a NURBS-curved surface). The upside reflection surface 12U serves to reflect light from the upside semiconductor-type light source. The downside reflection surface 12D serves to reflect light from the downside semiconductor-type light source.

The solenoid 5 is fixed to the heat sink member 9. The solenoid 5 has a plunger (an advancing/retracting rod) 13. The plunger 13 is positioned in a first location (a retracting location shown in FIG. 1) when no power is supplied to the solenoid 5, and is positioned in a second location when power is supplied to the solenoid 5. At the solenoid 5, a spring (not shown) adapted to automatically restore the plunger 13 from the second location to the first location is provided.

The driving force transmission mechanism 6 is provided between: a respective one of the rotary shafts 11U and 11D of the upside movable reflector 4U and the downside movable reflector 4D; and the plunger 13 of the solenoid 5. The driving force transmission mechanism 6 serves to transmit a driving force of the solenoid 5 to the upside movable reflector 4U and the downside movable reflector 4D, thereby transferring the upside movable reflector 4U and the downside movable reflector 4D between the first location and the second location.

The driving force transmission mechanism 6 is made of a rack 14, [11]an upside pinion 15U and a downside pinion 15D to be engaged with the rack 14 from the top and the bottom. The rack 14 is fixed to one end (a tip end) of the plunger 13. The upside pinion 15U and the downside pinion 15D are respectively fixed to one ends of the upside reflection surface 10U and the downside reflection surface 10D. The driving force transmission mechanism 6 is a mechanism adapted to convert a linear motion of the rack 14 to rotational motions of the upside pinion 15U and the downside pinion 15D.

The rack 14 is made of a metal member in this example. On the top and bottom of the rack 14, an upside gear portion 17U and a downside gear portion 17D are respectively provided, and a flat chamfer is provided on a respective one of the left and right sides. The upside gear portion 17U and the downside gear portion 17D are formed in the shape of an arc that is a part of a circle around a center around which a center shaft (not shown) of the plunger 13. It is to be noted that the upside gear portion 17U and the downside gear portion 17D may be formed in a flat shape. The upside pinion 15U and the downside pinion 15D are respectively engaged with the upside gear portion 17U and the downside gear portion 17D of the rack 14.

At the driving force transmission mechanism 6, a stopper adapted to position the upside movable reflector 4U and the downside movable reflector 4D in the first location and a stopper adapted to position the upside movable reflector 4U and the downside movable reflector 4D in the second location are respectively provided.

### (Description of Mounting Structure)

The upside pinion 15U and the downside pinion 15D configure a driving member of vehicle component in the first embodiment. On the other hand, the upside movable reflector 4U and the downside movable reflector 4D configure a driving target member of vehicle component in the first embodiment. Hereinafter, a mounting structure of the upside pinion 15U and the downside movable reflector 4U will be described. It is to be noted that the mounting structure of the downside pinion 15D and the downside movable reflector 4D is formed so as to be a structure that is substantially identical to the mounting structure of the upside pinion 15U and the upside movable reflector 4U; and therefore, its related description is omitted.

The upside rotary shaft 11U serving as a rotary shaft portion is provided on either one of the driving member and the driving target member, in the first embodiment, on the upside movable reflector 4U. A cylinder portion 12 having an insert hole into which the upside rotary shaft 11U is to be inserted is provided on either one of the driving member and the driving target member, in the first embodiment, on the upside pinion 15U.

On the upside rotary shaft 11U, a protrusion portion 16 is provided in a direction P1 that is orthogonal to an shaft line (a center shaft line) O1 of the upside rotary shaft 11U. The protrusion portion 16 is formed in a small columnar shape. On the cylinder portion 12, a slit 18 of which a width is smaller than a width (a diameter) of the protrusion portion 16 is provided in a direction 02 of the shaft line (the center axis line) of the cylinder portion 12. The width of the slit 18 is smaller as the slit goes from an opening end to a depth thereof. In other words, an opposite edge of the protrusion portion 16 is formed in a tapered shape. At an edge of an intermediate portion of the slit 18, a recessed portion 19 with which the protrusion portion 16 is configured to engage is provided in the direction P2 that is orthogonal to the shaft line 02 of the cylinder portion 12. The recessed portion 19 is formed in a small circular shape with its smaller diameter than that of the protrusion portion 16.

### (Description of Mounting Steps of Upside Pinion 15U and Upside Movable Reflector 4U)

The upside rotary shaft 11U of the upside movable reflector 4U is inserted into the cylinder portion 12 for the upside pinion 15U via the shaft lines O1 and 02. In addition, the protrusion portion 16 of the upside rotary shaft 11U is configured to engage into the slit 18 of the cylinder portion 12 via the shaft lines O1 and 02. At this time, the width of the protrusion 16 is larger than the width of the slit 18; and therefore, the slit 18 opens, and concurrently, the cylinder portion 12 is elastically deformed in such a manner as to be larger in width to the outside.

When the protrusion portion 16 is positioned in the recessed portion 19 of the slit 18, the cylinder portion 12 that is elastically deformed is elastically restored in such a manner as to be smaller in width to the inside. At this time, the recessed portion 19 is smaller than the protrusion portion 16; and therefore, the slit 18 is not completely restored to its original width. Thus, the cylinder portion 12 is established in a state in which the cylinder portion is elastically deformed in a state in which the width of the slit 18 is widened. In this manner, the protrusion portion 16 and an edge of the recessed portion 19 are established in a state in which they come into intimate contact with each other at a predetermined force, in other words, in a state in which they elastically engage with each other. As a result, the upside pinion 15U and the upside movable reflector 4U are mounted to each other in such a manner as to be free of a backlash around the shaft lines O1 and 02. At this time, the shaft line O1 of the upside rotary shaft 11U and the shaft line 02 of the cylinder portion 12 are aligned with each other with its appropriate precision in comparison with the conventional mounting structure of vehicle component. It is to be noted that when the cylinder portion 12 is widened to the outside, elastic engagement of the protrusion portion 16 and the recessed portion can be released; and therefore, the upside pinion 15U and the upside movable reflector 4U can demounted from each other.

### (Description of Functions of First Embodiment)

A vehicle headlamp 1 in the first embodiment is made of the constituent elements as described above, and hereinafter, its related functions will be described.

Power is supplied to a solenoid 5 and then the solenoid 5 is driven. Afterwards, a rack 14 moves forward or backward via a plunger 13. Concurrently, an upside pinion 15U and a downside pinion 15D are configured to rotate in the clockwise direction or in the counterclockwise direction. A potation force of the upside pinion 15U and the downside pinion 15D is transmitted to upside rotary shaft 11U and a downside rotary shaft 11D via a recessed portion 19 of the cylinder portion 12 and the protrusion portion 16 for an upside rotary shaft 11U and a downside rotary shaft 11D. At this time, an edge of a recessed portion 19 of a cylinder portion 12 for the upside pinion 15U and the downside pinion 15D and the recessed portion 16 of the upside rotary shaft 15U and the downside rotary shaft 11D are configured to elastically engage with each other. Thus, the cylinder portion 12 for the upside pinion 15U and the downside pinion 15D and a respective one of the upside rotary shaft 11U and the downside rotary shaft 11D is braked in rotation around the shaft line 02 of the cylinder portion 12 and the shaft line O1 for the upside rotary shaft 11U and the downside rotary shaft 11D.

In addition, the upside movable reflector 4U and the downside movable reflector 4D are configured to rotate in synchronism with a position shift from a first location to a second location or a position shift from the second location to the first location, and are positioned in the second location or in the first location. Afterwards, a light distribution pattern for low beam or a light distribution pattern for high beam are illuminatingly emitted forward of a vehicle.

### (Description of Advantageous Effects of First Embodiment)

The vehicle headlamp 1 in the first embodiment is made of the constituent elements and functions as described above, and hereinafter, its related advantageous effects will be described.

The vehicle headlamp 1 in the first embodiment is provided in such a manner that an edge of the recessed portion 19 of the cylinder portion 12 for the upside pinion 15U and the downside pinion 15D and the protrusion portion 16 for the upside rotary shaft 11U and the downside rotary shaft 11D are configured to elastically engage with each other; and therefore, between the cylinder portion 12 for the upside pinion 15U and the downside pinion 15D and a respective one of the upside rotary shaft 11U and the downside rotary shaft 11D, rotation around the shaft line 02 of the cylinder portion 12 and the shaft line O1 for the upside rotary shaft 11U and the downside rotary shaft 11D is braked. As a result, the vehicle headlamp 1 in the first embodiment is capable of mounting the cylinder portion 12 for the upside pinion 15U and the downside pinion 15D and a respective one of the upside rotary shaft 11U and the downside rotary shaft 11D to each other in such a manner as to be free of a backlash around the rotational direction, in other words, around the shaft lines O1 and 02.

The vehicle headlamp 1 in the first embodiment is provided in such a manner that an edge of the recessed portion 19 of the cylinder portion 12 for the upside pinion 15U and the downside pinion 15D and the protrusion portion 16 for the upside rotary shaft 11U and the downside rotary shaft 11D are configured to elastically engage with each other; and therefore, a respective one of the upside pinion 15U and the downside pinion 15D and a respective one of the upside rotary shaft 11U and the downside rotary shaft 11D can be mounted in such a manner as to be free of a backlash in the shaft lines O1 and 02. In this manner, a rotation force of the upside pinion 15U and the downside pinion 15D can be reliably transmitted to the upside rotary shaft 11U and the downside rotary shaft 11D.

The vehicle headlamp 1 in the first embodiment is provided in such a manner that an edge of the recessed portion 19 of the cylinder portion 12 for the upside pinion 15U and the downside pinion 15D and the protrusion portion 16 for the upside rotary shaft 11U and the downside rotary shaft 11D are configured to elastically engage with each other; and therefore, an angular shift around a center of the protrusion portion 16 and the recessed portion 19 between a respective one of the upside pinion 15U and the downside pinion 15D and the protrusion portion 16 for the upside rotary shaft 11U and the downside rotary shaft 11D (in the directions P1 and P2 that are orthogonal to the shaft lines O1 and 02) can be absorbed.

### (Description of Second Embodiment)

FIG. 6 and FIG. 7 show a second embodiment of a mounting structure of vehicle component, according to the present invention. Hereinafter, the mounting structure of vehicle component in the second embodiment will be described. In the figures, like constituent elements of FIG. 1 to FIG. 5 are designated by like reference numerals.

In the second embodiment, on an upside rotary shaft 11U and a downside rotary shaft 11D, each of which serves as a rotary shaft portion, a plate portion 20 that is configured to engage with a slit 18 is provided along an shaft line O1. The plate portion 20 is configured to engage with the slit 18, thereby making it possible to prevent a backlash around the center of the protrusion portion 16 and the recessed portion 19 between a respective one of the upside pinion 15U and the downside pinion 15D and the protrusion portion 16 for the upside rotary shaft 11U and the downside rotary shaft 11D (in the directions P1 and P2 that are orthogonal to the shaft lines O1 and 02). In the second embodiment, there can be attained functions and advantageous effects that are substantially identical to those of the first embodiment described previously.

### (Description of Third Embodiment)

FIG. 9 shows a third embodiment of a mounting structure of vehicle component, according to the present invention. Hereinafter, the mounting structure of vehicle component in the third embodiment will be described. In the figure, like constituent elements of FIG. 1 to FIG. 8 are designated by like reference numerals.

In the third embodiment, an outer circumference surface of a protrusion portion 163 and an inner circumferential surface of a recessed portion 193 are formed in a tapered (conical) shape such that their related outer diameter and inner diameter are smaller as they depart from the axial cores O1 and 02. In this manner, the shaft line O1 of the upside rotary shaft 11U and the shaft line 02 of the cylinder portion 12 can be alighted with each other with its further appropriate precision.

### (Description of Modification Example)

FIG. 8 shows modification examples of a mounting structure of vehicle component, according to the present invention. Hereinafter, its related modification examples will be described. In the figure, like constituent elements of FIG. 1 to FIG. 7 are designated by like reference numerals.

In a modification example of FIG. 8 (A), a protrusion portion 16 is formed in a small columnar shape, and a recessed portion 190 is formed in a rhombic shape. The modification example of FIG. 8 (A) is capable of achieving functions and advantageous effects that are substantially identical to those of the first and second embodiments described previously. In a modification example of FIG. 8 (B), a protrusion portion 161 is formed in a small pyramid shape, and a recessed portion 191 is formed in a triangular shape. In a modification example of FIG. 8 (C), a protrusion portion 162 is formed in a small semicircular column shape, and a recessed portion 192 is formed in a semicircular shape. The modification example of FIG. 8 (B) and the modification example of FIG. 8 (C) are configured in such a manner as to disable demounting, and a slip-off structure is provided. Other constituent elements are capable of achieving functions and advantageous effects that are substantially identical to those of the first and second embodiments described previously.

### (Description of Examples Other Than First, Second, and Third Embodiments)

It is to be noted that in the first, second, and third embodiments described previously, the upside pinion 15U and the downside pinion 15D configure a driving member of vehicle component, whereas the upside movable reflector 4U and the downside movable reflector 4D configure a driving target member of vehicle component. However, in the present invention, as a driving member, there may be a member other than the upside pinion 15U or the downside pinion 15D, for example, a driving shaft (a rotary shaft) or the like that is mounted to a motor or a solenoid, or alternatively, as a driving target member, there may be a member other than an upside movable reflector 4U or a downside movable reflector 4D, for example, a shade or the like configured to switch a light distribution pattern.

## Claims

1. A mounting structure for vehicle component, for mounting a driving member and a driving target member of vehicle component to each other, the mounting structure comprising:
a rotary shaft portion that is provided on either one of the driving member and the driving target member; and
a cylinder portion that is provided on the other one of the driving member and the driving target member, the cylinder portion having an insert hole into which the rotary shaft portion is to be inserted,
wherein a protrusion portion that is orthogonal to an shaft line of the rotary shaft portion is provided on the rotary shaft portion,
wherein a slit of which a width is smaller than a width of the protrusion portion is provided in the cylinder portion, and
wherein a recessed portion with which the protrusion is configured to engage is provided in an edge of the slit.

2. The mounting structure of vehicle component, according to claim 1, wherein a plate portion engaging with the slit is provided on the rotary shaft portion.
